# EUROPEAN PATENT APPLICATION

(11) **EP 1 262 889 A2**
(43) Date of publication of application: **04.12.2002**
(21) Application number: 01310491.4
(22) Date of filing: 14.12.2001
(51) Int. Cl.: G06F 17/60

(54) **Parts management system and method for a vehicle**

(30) Priority: 15.12.2000 JP 2000382136
(71) Applicant: Pioneer Corporation, Tokyo-to (JP)
(72) Inventor: Yamanaka, Tadamasa, Pioneer Corporation, Kawagoe-shi, Saitama-ken (JP); Odashima, Masahiro, Pioneer Corporation, Kawagoe-shi, Saitama-ken (JP); Sakuma, Koji, Pioneer Corporation, Kawagoe-shi, Saitama-ken (JP)
(74) Representative: Townsend, Victoria Jayne

(57) **Abstract**

In a parts management system for a mobile unit, a detection unit is provided at the mobile unit and adapted to detect information related to management of parts of the mobile unit such as a vehicle. A service center management unit is provided at a service center and permitted to communicate to the detection unit. The service center management unit is adapted to produce information for a user of the mobile unit according to the information related to the management of the parts of the mobile unit and detected by the detection unit. An information unit is permitted to communicate to the service center management unit and adapted to send to the user of the mobile unit the information for the user of the mobile unit and produced by the service center management unit.

## Description

### BACKGROUND OF THE INVENTION

The present invention relates to a parts management system and a parts management method for mobile units, which are capable of managing information related to parts for mobile units, such as information related to replacement time of vehicle's parts.

Conventionally, to replace currently used consumable parts of vehicles with new ones, it is normally required that users themselves record or memorize when consumable parts of their own vehicles should be replaced. The users are also able to individually make contact with dealers dealing with vehicle parts, so that the users can order necessary parts and decide the date and time for actual replacement work.

However, when the replacement time of consumable parts is managed by users themselves, it may happen that some users are not able to decide appropriate replacement time of the parts. To appropriately decide the replacement time is considerably difficult in technical matters and complicated for ordinary uses. Further, it is frequent that work to actually replace an old parts with new one imposes a burden on vehicle users.

### SUMMARY OF THE INVENTION

The present invention is directed to overcome the foregoing problems. Accordingly, it is an object of the present invention to provide a parts management system and a parts management method for mobile units, which are capable of suitably managing information related to parts of mobile units and reducing a burden of parts management imposed on users of the mobile unit.

In order to realize such object, as one aspect of the present invention, a parts management system comprises a detection device provided at the mobile unit and adapted to detect information related to management of parts of the mobile unit; a service center management device provided at a service center and permitted to communicate to the detection device, the service center management device being adapted to produce information for a user of the mobile unit according to the information related to the management of the parts of the mobile unit and detected by the detection device; and a information device permitted to communicate to the service center management device and adapted to send to the user of the mobile unit the information for the user of the mobile unit and produced by the service center management device.

Accordingly, the service center management device produces the information for the user of the mobile unit according to the information related to the management of the parts of the mobile unit and detected by the detection device, and the information device sends to the user of the mobile unit the information for the user of the mobile unit and produced by the service center management device. Thus it is possible to manage the parts of the mobile unit at the service center and to provide the user with suitable information, thereby suitably managing the parts and reducing a burden to the user. It is not always necessary to provide the information device at the mobile unit, but such information can be sent to a user's telephone, user's cellular-phone, or the like, as a voice massage; a facsimile; or an e-mail. In addition, detecting the information about management of the parts can be executed when the engine is started. Alternatively such detection may be conducted whenever a constant period of time elapses after the engine start. As the mobile unit, a vehicle, a small craft, and others can be adopted.

In order to achieve the above object, according to another aspect of the present invention, a parts management system for a mobile unit comprises a detection device provided at the mobile unit and adapted to detect information related to management of parts of the mobile unit; a service center management device provided at a service center and permitted to communicate to the detection device, the service center management device being adapted to produce information for a parts supplier according to the information related to the management of the parts of the mobile unit and detected by the detection device; a parts supplier management device provided as a unit of the parts supplier and permitted to communicate to the service center management device; and a information device permitted to communicate to the service center management device, wherein the parts supplier management device is adapted to produce information related to part supply according to the information for the parts supplier, the service center management device is adapted to produce information for the user of the mobile unit according to the information related to the part supply and the information device is adapted to send to the user of the mobile unit the information for the user of the mobile unit.

According to this configuration, the service center management device produces the information for the parts supplier according to the information related to the management of the parts of the mobile unit and detected by the detection device, the parts supplier management device produces the information related to the part supply according to the information for the parts supplier, the service center management device produces the information for the user of the mobile unit according to the information related to the part supply and the information device sends to the user of the mobile unit the information for the user of the mobile unit. It is therefore possible to manage the parts of the mobile unit at the service center, thus providing suitable information with the user. Managing the parts can be done in a suitable manner. Because the user collectively obtains the required information without contacting with each dealer who supplies each part, it is possible to reduce the burden to the user. It is not always necessary to provide the information device at the mobile unit, but such information can be sent to a user's telephone, user's cellular-phone, or the like, as a voice massage; a facsimile; or an e-mail.

It is preferable that the information device is provided at the mobile unit. It is therefore possible to promptly provide the user of the mobile unit with the required information.

It is also preferable that the mobile unit is provided with a phone conversation device for making phone conversations from the user to the service center in accordance with the information sent from the information device.

This configuration makes it possible to orally transmit the order information to the operator in the service center, thus easily coping with the complicated order, and so on. In this case, a receivi6ng device for receiving the demand of phone conversations may be provided at the mobile unit, so that the receiving unit, according to the instruction, makes the phone conversations device automatically start the phone conversations.

It is also preferable to provide a transmitting device at the mobile unit for transmitting a demand to the service center management device, the demand being determined by the user of the mobile unit with reference to the information sent from the information device, so that the demand the user of the mobile unit decides can be sent a service center.

Preferably, the service center management device is adapted to receive the demand transmitted from the transmitting device and produce order information of at least one of the parts for the parts supplier according to the demand, thus transferring the order information to the parts supplier. The order information is therefore produced according to the demand the user of the mobile unit decides.

Still preferably, the information for the user of the mobile unit (300) is information related to at least one of the parts required for replacement in the mobile unit, so that the date and time for replacing the parts can be managed in a certain manner.

Still preferably, the information related to the management of the parts of the mobile unit and detected by the detection device is information indicating a replacement date and time of at least one of the parts of the mobile unit. By t is configuration, when a constant period of time elapses from the date and time after old parts were replaced by new ones, the information device is able to send to the user of the mobile unit the information notifying when the parts must be replaced.

It is also preferable that the information related to the management of the parts in the mobile unit and detected by the detection device is information indicating a mileage of the mobile unit. In this structure, when the mobile unit runs up to a constant mileage after an old parts were replaced by new one, it is possible for the information device to send to the user of the mobile unit the information notifying that the parts must be replaced again.

Preferably, the detection device includes device for detecting a position at which the mobile unit exists, and the service center management device produces the information for the user of the mobile unit according to the detected position of the mobile unit. In this configuration, it is possible to indicate to the user of the mobile unit a dealer whose shop is located close to the mobile unit.

It is preferable that the mobile unit comprises an input device for inputting the demand into the transmitting device, the demand specifying one of the parts suppliers, and the transmitting device is adapted to transmit the demand inputted from the input device to the service center management device.

In order to achieve such object, according to further aspect of the present invention, there is provided a parts management method for a mobile unit, comprising the steps of: detecting, in the mobile unit, information related to management of parts of the mobile unit; producing, in a service center, information for a user of the mobile unit according to the detected information related to the management of the parts of the mobile unit; and sending to the user of the mobile unit the produced information for the user of the mobile unit.

Accordingly, the information for the user of the mobile unit is produced in the service center according to the information related to the management of the parts of the mobile unit, and the produced information for the user of the of the mobile unit is sent to the user of the mobile unit. It is therefore possible to manage the parts of the mobile unit at the service center and to provide the user with suitable information about parts replacement, thus suitably managing the parts and reducing a burden to the user. In addition, the detection of the information of the management of the parts is executed when the engine is started, or whenever a constant period of time elapses after the engine start.

In order to achieve the foregoing object, according to still another aspect of the present invention, there is provided a parts management method for a mobile unit, comprising the steps of: detecting, at the mobile unit, information related to management of parts of the mobile unit; producing, at a service center, information for a parts supplier according to the detected information related to the management of the parts of the mobile unit; producing, at the parts supplier side, information related to part supply according to the information for the parts supplier; producing, at the service center, information for the user of the mobile unit according to the information related to the part supply; and sending to the user of the mobile unit the information for the user of the mobile unit.

The information for the user of the mobile unit may be information related replacement parts of the mobile unit. In this structure, it is possible to certainly manage the date and time for parts replacement.

Incidentally, in order do easily understand the present invention, the reference characters in parentheses are added to the elements of the present invention, respectively, but the present invention is not limited to the structures shown in the figures described hereinafter.

### BRIEF DESCRIPTION OF THE DRAWINGS

Other objects and aspects of the present invention will become apparent from the following description of embodiments with reference to the accompanying drawings in which:
Fig. 1 is a block diagram showing a schematic configuration of a parts management system of an embodiment according to the present invention;
Fig. 2 is a block diagram showing units with which a vehicle is equipped;
Fig. 3 is a view showing flows and contents of items of information in replacing parts of the vehicle;
Fig. 4 is a flowchart partly showing the processing executed in the vehicle;
Fig. 5 is a flowchart partly showing the processing executed in a service center;
Fig. 6 is a flowchart partly showing the processing executed by a dealer or the like;
Fig. 7 is a flowchart partly showing the processing executed in the service center;
Fig. 8 is a flowchart partly showing the processing executed in the vehicle;
Fig. 9 is a flowchart partly showing the processing executed in the service center;
Fig. 10 is a flowchart partly showing the processing executed by the dealer or the like;
Fig. 11 is an example of displayed information transferred from a vehicle center to the service center;
Fig. 12 is an example of displayed information transferred from the service center to the dealer or the like;
Fig. 13 is an example of displayed information transferred from the dealer or the like to the service center;
Fig. 14 is an example of displayed information transferred from the service center to the vehicle; and
Fig. 15 is an example of displayed detail information indicated to the dealer or the like.

### DETAILED DESCRIPTION OF THE PREFERRED EMBODIMENTS

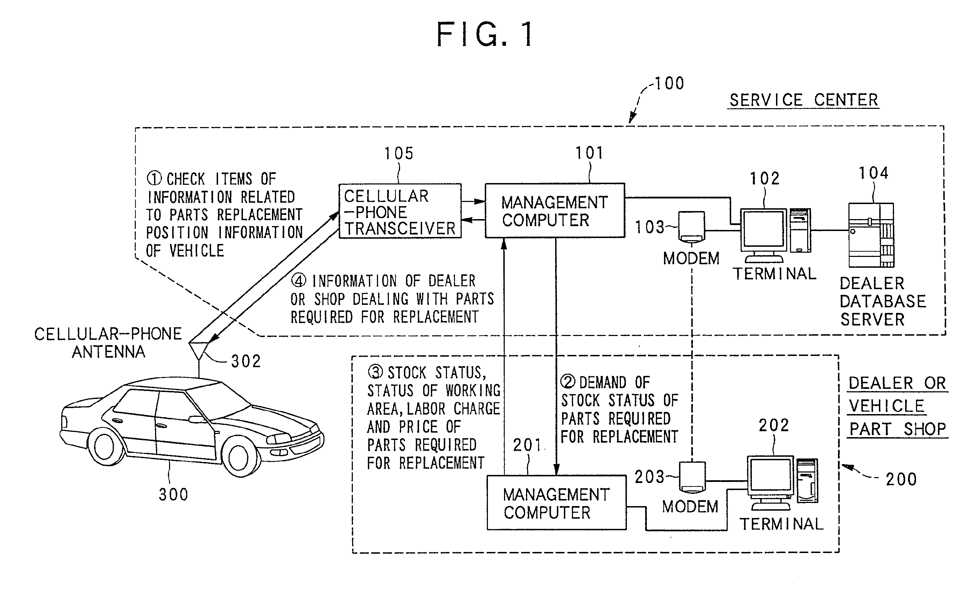

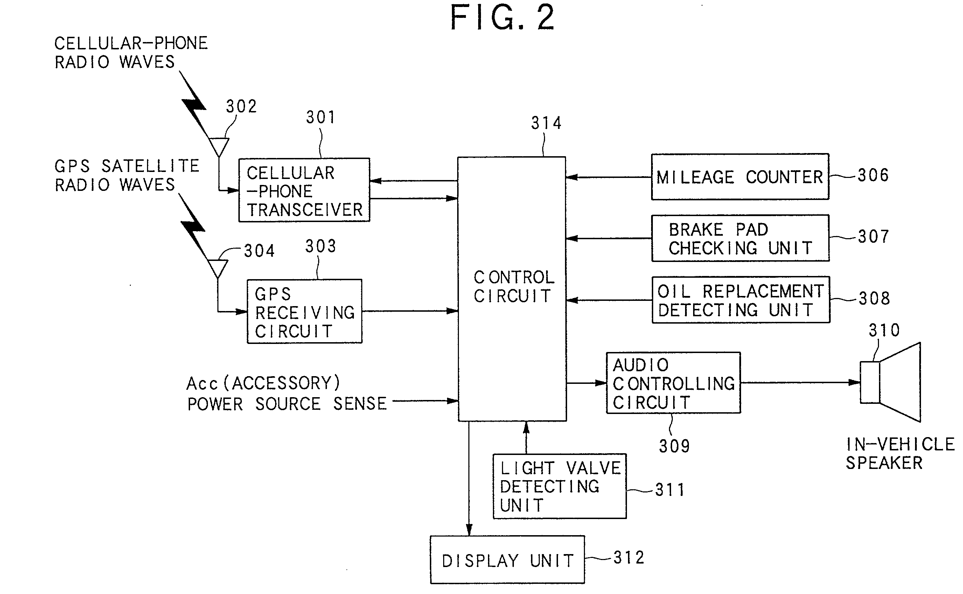

A preferred embodiment of a parts management system of the present invention will now be described hereinafter with reference to the accompanying Figs. 1 to 15. Fig. 1 is a block diagram showing a schematic configuration of a parts management system, and Fig. 2 is a block diagram showing units with which a vehicle is equipped.

As shown in Fig. 1, a service center 100 comprises a management computer 101 with a storage device storing data related to the vehicle and an user therewith, a terminal 102 connected to the management computer 101 and a modem 103 connected to the terminal 102. The service center 100 also comprises a dealer database server 104 storing data related to dealers and so on, who are registered, and a cellular-phone transceiving unit 105 connected to the management computer 101.

A shop of the registered dealer or registered vehicle part shop 200 is provided with a management computer 201, a terminal 202 connected to the management computer 201, and a modem 203 connected to the terminal 202. Fig. 1 discloses only one shop of the registered dealer or one registered vehicle part shop 200, but there can be provided a plurality of shops of the registered vehicle part shops 200 each having the same structure described above.

As shown in Figs. 1 and 2, a vehicle 300 is equipped with a cellular-phone transceiving unit 301 for communicating the vehicle 300 with the dealer' s shop 200, a cellular-phone antenna 302 connected to the cellular-phone transceiving unit 301, a GPS (Global Positioning Systems) receiving circuit 303 for receiving GPS satellite radio waves, and a receiving antenna 304 connected to the GPS receiving circuit 303. The vehicle 300 is also provided with a mileage counter 306 for counting the mileage of the vehicle 300, a brake pad checking unit 307 for checking a brake pad of the vehicle 300, thus detecting wear of the brake pad, an oil replacement detecting unit 308 for detecting a period for which engine oil is used, an audio controlling unit 309 for controlling sound outputted from an audio unit in the vehicle, and an in-vehicle speaker 310 connected to the audio controlling unit 309 and operative to output sound. In addition, the vehicle 300 is provided with a light valve detecting unit 311 for detecting periods for which light valves are used in the vehicle 300, a display unit 312 with a touch panel for displaying information related to part replacement, and a control unit 314.

The cellular-phone transceiving unit 301, the GPS receiving circuit 303, the mileage counter 306, the brake pad detecting unit 307, the oil replacement detecting unit 308, the audio controlling unit 309, the light valve detecting unit 311 and the display unit 312 are connected to the control unit 314, respectively. A signal outputted when detecting that the vehicle key is rotated to the accessory position is supplied to the control unit 314. Hereinafter, this signal is referred to as an accessory source sense signal.

As the brake pad checking unit 307, for example, a sensor for measuring the width of the brake pad may be used. The oil replacement detecting unit 308 can be realized by, by way of example, a sensor for detecting the timing at which the oil cap is closed may be used, thus being able to determine the date and time to replace the oil according to the detected result.

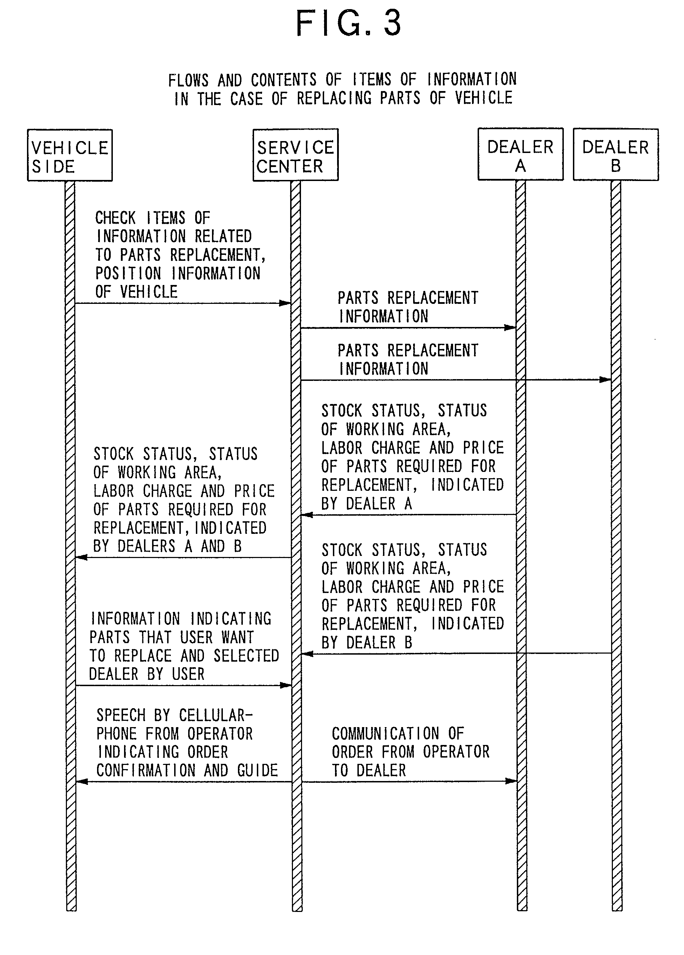

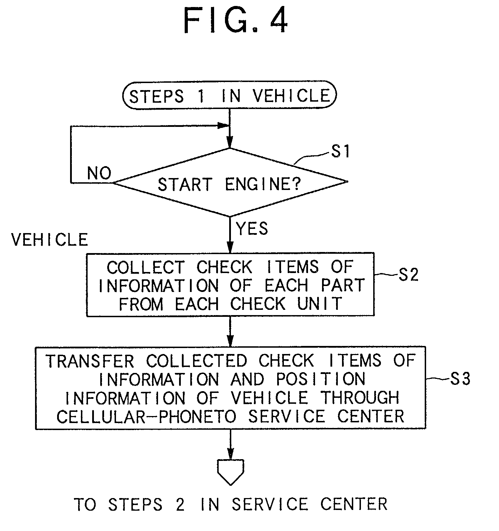

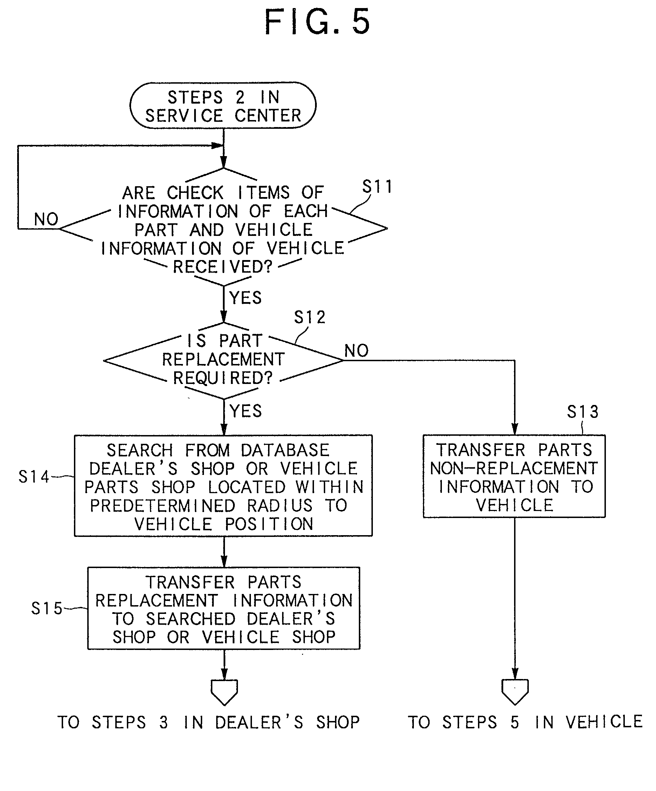

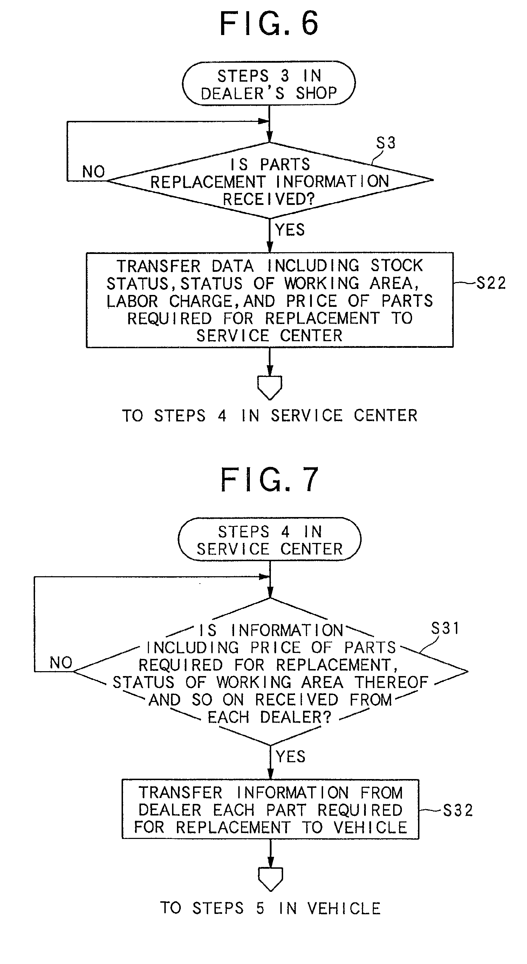

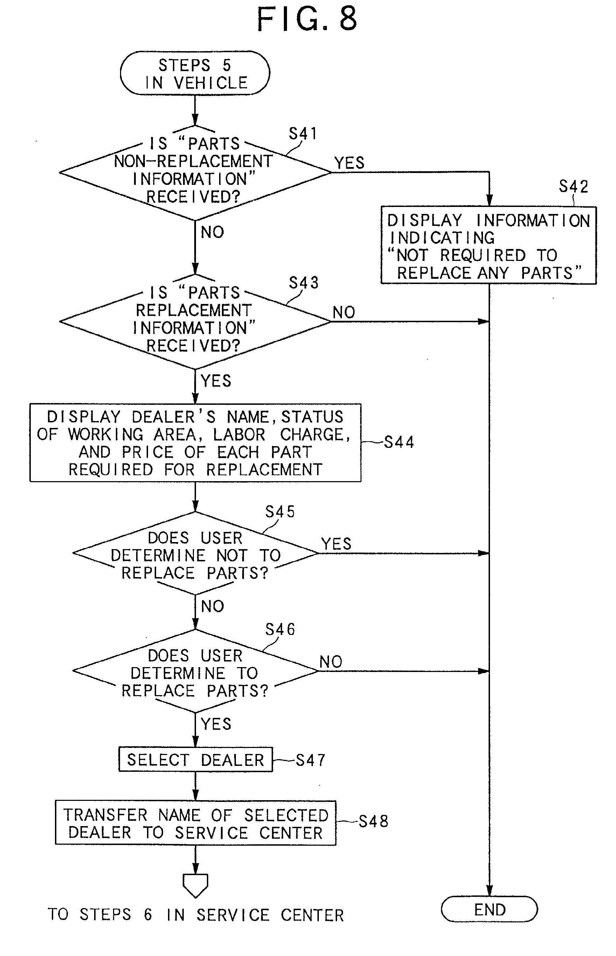

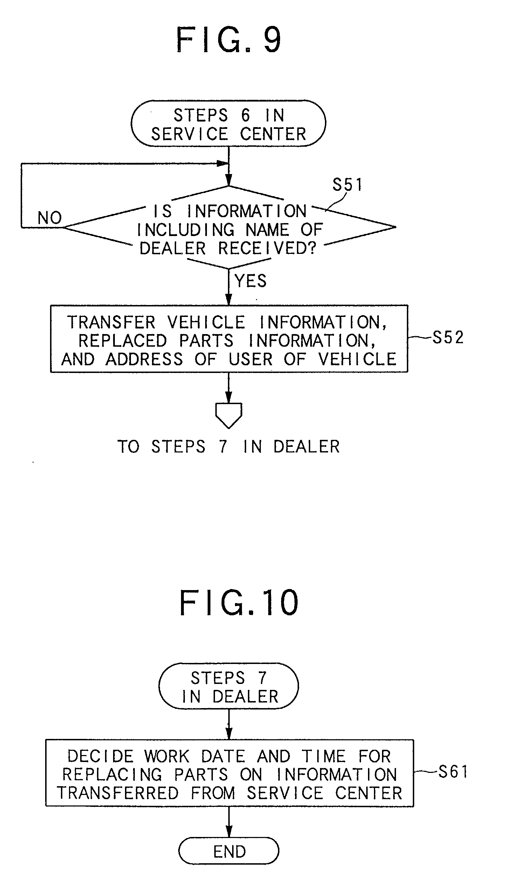

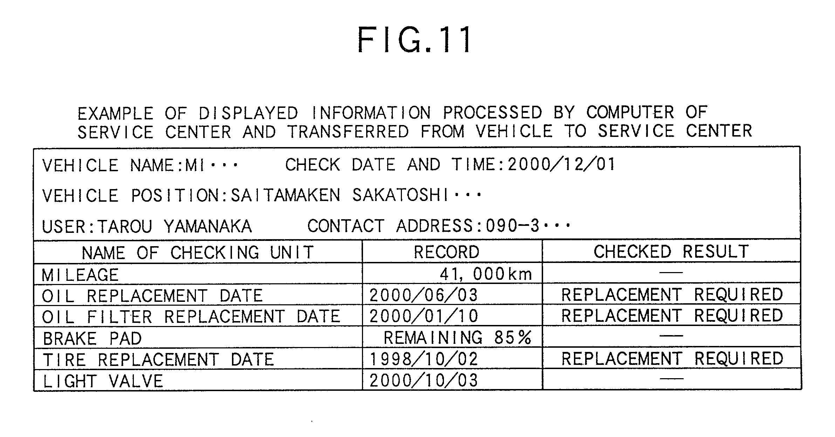

Next, the procedures for parts management by using the parts management system of the embodiment is explained hereinafter with reference to Figs. 3 to 15. Fig. 3 is a view showing flows and contents of items of information in replacing parts of the vehicle 300. Fig. 4 is a flowchart showing a part of processing executed in the vehicle 300. Fig. 5 is a flowchart showing a part of processing executed in the service center 100. Fig. 6 is a flowchart showing a part of processing executed by the dealer or the like. Fig. 7 is a flowchart showing a part of the processing executed in the service center 100. Fig. 8 is a flowchart showing a part of the processing executed in the vehicle 300. Fig. 9 is a flowchart showing a part of the processing executed in the service center 100. Further, Fig. 10 is a flowchart showing a part of the processing executed by the dealer or the like.

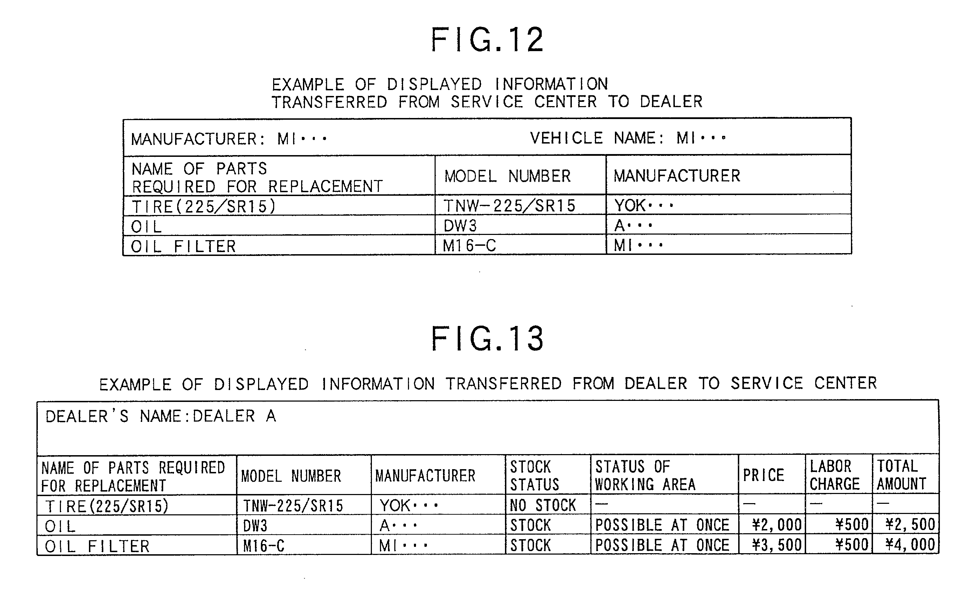

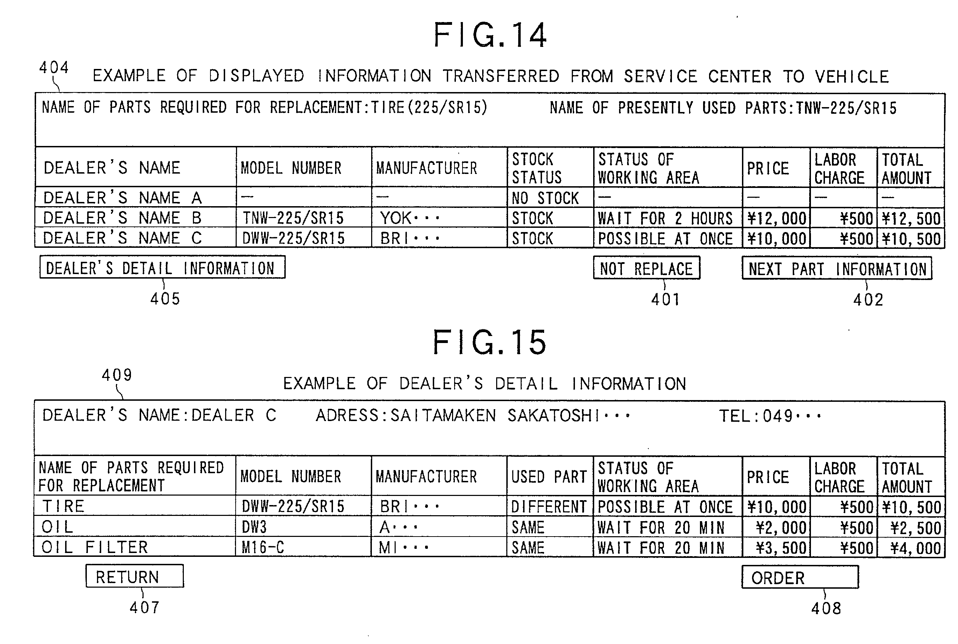

Fig. 11 is an example of displayed information transferred from the vehicle 300 to the service center 100. Fig. 12 is an example of displayed information transferred from the service center 100 to the dealer side. Fig. 13 is an example of displayed information transferred from the dealer side to the service center 100. Fig. 14 is an example of displayed information transferred from the service center 100 to the vehicle 300. Fig. 15 is an example of displayed detail information indicated to the dealer side.

The control unit 314, which is equipped with the vehicle 300, executes the processing shown in Fig. 4. At Step S1, the control unit 314 detects the start of the engine in the vehicle 300, before shifting its processing to Step S2.

When the engine has been started, at Step S2, the control unit 314 collects check items of information related to parts replacement in the vehicle 300 from the mileage counter 306, the brake pad checking unit 307, the oil replacement detecting unit 308, and the light valve detecting unit 311. That is, the check items of information related to the parts replacement include an item of information indicating the mileage of the vehicle 300, which is obtained by the mileage counter 306, and an item of information indicating the remaining amount of the brake pad, which is obtained by the brake pad checking unit 307. The check items of information related to the parts replacement also include an item of information indicating the date and time of the last replacement of the oil, which is obtained by the oil replacement detecting unit 308, and an item of information indicating the date and time of the last replacement of the light valve, which is obtained by the light valve detecting unit 311. The position information indicating the present position at which the vehicle 300 exists is obtained by the GPS receiving circuit 303 according to the GPS satellite radio waves received through the receiving antenna 304. The control unit 314 also collects the position information of the vehicle 300 from the GPS receiving circuit 303 in response to the engine start.

Next, at Step S3, the control unit 314 transfers, to the service center 100, the check items of information related to the parts replacement and the position information. The management computer 101 of the service center 100 receives the transferred information through the cellular-phone antenna 302 and the cellular-phone transceiving unit 301. In this embodiment, whenever the engine is started, the check items of information related to the parts replacement and the position information are collected, thus being transferred to the management computer 101.

The check items of information transferred to the management computer 101 in the service center 100 and the foregoing position information are processed in accordance with the steps shown in Fig. 5. The management computer 101 executes these steps.

At Step S11 shown in Fig. 5, the management computer 101 determines whether or not the check items of information related to the parts replacement and the position information are received. And in cases it is determined that the check items of information related to the parts replacement and the position information have been received, the management computer 101 updates the data stored on the storage device, before shifting its processing to Step S12. At Step S12, the management computer 101 determines whether or not to replace at least one of parts in the vehicle 300 is required according to the check items of information related to the part replacement. At this Step S12, for example, the management computer 101 determines whether or not each part in the vehicle 300 exceeds over each predetermined usable limit previously set thereto according to the mileage or the last date and time at which the parts were replaced before, such information being included in the check items of information related to the parts replacement.

Fig. 11 shows an example of information displayed on the terminal 102 according to the determination at Step S12. On the terminal 102, the name of the vehicle 300, the date and time of detecting (collecting) the check items of information related to the parts replacement, a vehicle position as the position information, a user of the vehicle 300, the address of the user to be contacted, names of the check items of information related to the parts replacement, stored data on the storage devices, which correspond to the check items of information related to the parts replacement, and determination results with respect to the checked items of information are displayed in a table format. That is, the names of the check items, the stored and the determination results are made to correspond to each other with respect to each check item.

When the management computer 101 determines that it is not required to replace any parts in the vehicle 300 at Step S12, the management computer 101 shifts its processing to Step S13, at which the information indicating that any part is not required to be replaced is transferred to the vehicle 300, through the cellular-phone transceiving circuit 105. This information is referred to as "parts non-replacement information," hereinafter. The processing at Step S13 at which the transferred information is received and processed in the vehicle 300 will be described later (refer to Fig. 8).

At Step S12, when the management computer 101 determines that it is required to replace at least one of parts of the vehicle 300, the management computer 101 shifts its processing to Step S14. At Step S14, the management computer 101 searches the data in the dealer database server 104 to detect, on the basis of the position information of the vehicle 300, at least one dealer's shop not only located within a predetermined radius from the current vehicle position but also registered in the data stored in dealer database server 104.

At Step S15, when detecting a certain shop 200 of a dealer, which satisfies locating conditions required for the shop, the management computer 101 transfers, to the dealer's shop, via the terminal 102, the modem 103 and Internet, the vehicle information identifying the vehicle 300 and the parts information indicating at least one part of the vehicle 300, which is required for replacement. Fig. 12 shows an example of the transferred information at Step S15 displayed on the terminal 202. On the terminal 202, the names of parts required for replacement, the model numbers of parts required for replacement, and the manufacturer's names of parts required for replacement are displayed in a table format. That is, the names of parts, the model numbers of the parts, and the manufacturer's names thereof are made to correspond to each other with respect to each part.

The processing carried out in the dealer's shop 200 by receiving the transferred information will be now described in conjunction with Fig. 6. The management computer 201 in the dealer's shop 200 executes the processing.

At Step S21 in Fig. 6, the management computer 201 determines whether or not both of the vehicle information and the part information have been received. When it is determined that both of the vehicle information and the part information have been received, the management computer 201 transfers the received vehicle information and the part information through the modem 203 and the terminal 202 to the management computer 201, then shifting its processing to Step S22.

At Step S22, the management computer 201 produces, on the basis of the vehicle information, the parts information and a predetermined database build therein, data including stock statuses of parts required for replacement, statuses of working areas, prices of parts required for replacement, labor charges, and the total amount of necessary charges. In this embodiment, for example, parts to be replaced are plural in number. The stock statuses of parts indicate whether replacement parts are in stock in the dealer's shop 200 or out of stock. The working areas shows places in which the replacement work is executed in the manufacturers. The labor charges indicate charges required for replacement work of the parts. The produced data are transferred to the service center 100 via the terminal 202, the modem 203, and Internet. The above data related to the parts required for replacement is referred to "parts replacement information" hereinafter.

Fig. 13 shows an example of information displayed on the terminal 202 by the processing of the management computer 201. On the terminal 202, in addition to dears' names, parts names, model numbers, manufacturers' names, stock statuses, the status of working areas, parts prices, labor charges, the total amount of the parts prices and the labor charges, and others are displayed in a table format. That is, the parts names, the model numbers, the manufacturers' names, the stock statuses, the status of working area, the parts prices, the labor charges, the total amount of the parts prices and the labor charges are made to correspond to each other with respect to both of each part required for replacement and each manufacturer. In this embodiment, the management computer 201 produces, on the basis of the predetermined database, the data including the stock statuses, the status of working area, the prices of the parts, the labor charges, the total amount of the prices and the labor charges, and others. It is possible for an operator to input the data including the stock statuses, the status of working area, the prices of the parts, the labor charge, the total amount of the prices and the labor charge, and others, to the management computer 201.

The data transferred from the management computer 201 in the dealer's shop 200 to the management computer 101 in the service center 100 are processed in accordance with the steps shown in Fig. 7. The management computer 101 executes processing written at those steps. At Step S31, the management computer 101 determines whether or not the data from the management computer 201 in the dealer's shop 200 are received. And if determined that the data have been received (the determination is Yes at Step S31), the management computer 101 shifts its processing to Step S32. The data above-mentioned from the management computer 201 can be received through the modem 103 and the terminal 102.

At Step S32, the management computer 101 transmits at least one of the parts non-replacement information and the parts replacement information.

Fig. 8 shows the steps executed by the control unit 314 in the individual vehicles 300 that have received the parts replacement information. At Step S41 in Fig. 8, the control unit 314 determines whether or not the parts non-replacement information has received, which has been transferred in response to processing done at Step S13 in Fig. 5, if necessary. In cases it is determined that the parts non-replacement information has been received, that is, the determination at Step S41 is Yes, the control unit 314 proceeds to the processing at Step S42, at which information indicating it is not required to replace any part of the vehicle 300 is displaced, on the display unit 312. Then the control unit 314 terminates the processing. This parts non-replacement information can be received through the cellular-phone antenna 302 and the cellular-phone transceiving unit 301 under the control of the control unit 314.

In contrast, when the determination at Step S41 is negative (No), the control unit 314 proceeds to the processing at Step S43, at which whether or not the parts replacement information has been received is determined. This parts replacement information has been transferred responsively to the processing done at Step S32 in Fig. 7, if necessary. In cases the determination at Step S43 is No, the control unit 314 ends its processing. By contrast, in cases the determination at Step S43 is Yes, that is, the parts replacement information has been received by the control unit 314, the control unit 314 shifts its processing to Step S44 to display the received parts replacement information on the display unit 312, before proceeding to the processing at Step S45. The parts replacement information can be received through the cellular-phone antenna 302 and the cellular-phone transceiving unit 301 under the control of the control unit 314.

Fig. 14 shows an example of the received information displayed on the display unit 312 of the vehicle 300. In this example, the information displayed at each vehicle is grouped into each part that requires to be replaced. For example, as the item of the parts replacement information, on the display unit 312, the name of a part required for replacement, the name of a part currently used, and the names of dealers that deal with the part required for replacement are displayed in a table format. The displayed item of the parts replacement information in the table format also includes the model numbers of the parts handled by the respective dealers, the manufacturers' names of such parts, and the stock statuses of such parts. In addition, the displayed item of the parts replacement information further includes the statuses of working areas in the respective manufacturers, the prices of such parts, the labor charges for replacing the parts, and the total amount of the prices and the labor charges. That is, the dealers' names, the model numbers, the manufacturers' names, the stock statuses, the statuses of working areas, the prices, the labor charges, and the total amount are made to correspond to each other with respect to both of each part required for replacement and each dealer.

With the screen of the display unit 312 observing, the user on the vehicle can select a desired replacement part, and/or refers to the statuses of working areas and the total amounts of the respective dealers with respect to the selected part, so that the user is able to choose a desired dealer and obtain other necessary information.

When the user on the vehicle touches a key 401 indicating "NOT REPLACE" displayed on the display unit 312, the touch panel of the display unit 312 sends an instruction corresponding to the touch of the key 401 to the control unit 314 so that the control unit 314 once ends the above displaying operation, but in cases where the engine is re-started, the control unit 314 repeatedly executes the same displaying operations.

When the user on the vehicle touches a key 402 indicating "NEXT PARTS INFORMATION" displayed on the display unit 312, the touch panel of the display unit 312 sends another instruction corresponding to the touch of the key 402 to the control unit 314 so that the control unit 314 displays one of the items of parts replacement information, which is related to another part required for replacement in the same table format shown in Fig. 14. If the user has an intention to replace another part that has yet to be displayed, not the currently displayed part, the user is able to repeat the selection using the key 402 until an item of parts information related to a desired one comes up on the screen.

When the user on the vehicle touches one of the keys 404 indicating dealers' names displayed on the display unit 312 to select it, the touch panel of the display unit 312 sends an instruction corresponding to the touch to the control unit 314, so that the control unit 314 selects one of the dealers corresponding to the touched key 404. When the user specifies one of the dealers by touching a key 405 indicating "DEALER'S DETAIL INFORMATION" displayed on the display unit 312, the touch panel of the display unit 312 sends an instruction corresponding to the touch to the control unit 314, so that the control unit 314 displays a dealer's detail image shown in Fig. 15 on the display unit 312. In an example of the displayed image shown in Fig. 15, the name of a certain specified dealer and the address thereof are displayed in a table format. In addition, in such image, the names of the parts that the user can order, the model numbers of such parts, the manufacturers' name of such parts, information indicating whether or not each listed part is identified with the part presently used, the stock statuses of such parts, the statuses of working areas, the prices, the labor charges, and the total amount are displayed correspondingly to each other with respect to both of each name of each part that the user can purchase.

In the image shown in Fig. 15, keys 407 and 408 are displayed. The key 407 indicates "RETURN" for sending to the control unit 314 an instruction to return the displayed image to the image shown in Fig. 14, while the key 408 indicates "ORDER" for sending to the control unit 314 an instruction to order a desired part required for replacement to the selected dealer. When deciding to order a certain part of the presently selected dealer, the user on the vehicle touches the key 408 indicating "ORDER" to select it. The order processing is partly included in the processing steps described hereinafter. As shown in Fig. 15, the dealer's detail image includes a field 409 in which displayed are incentive information given to the user who orders through a selected dealer and some advertisements.

The present embodiment allows dealer's information including incentive information and advertisements to be offered to the user on the vehicle. The present embodiment also permits the dealer to have introductions of users who desire replacement parts, without particular sales activities, and to obtain users even from areas in which the dealer's shop is not located. For making the dealers utilize this system for sales, the service center 100 is entitled to have payment, for example, every month from the dealers and/or parts sale networks registered in the service center 100. The fee to be paid to the service center 100 can be decided such that, by way of example, the fee is composed of a basic registration fee to be regularly paid, for example, every month and an irregular fee charged when advertisements and/or incentive information for sales are carried through the present system.

After Step S45 in Fig. 8, the control unit 314 determines whether or not the instruction that no parts replacement is necessary has been received, in other words, the user has selected the key 401. In cases the determination is Yes at Step S45, the control unit 314 ends the processing, while in cases the determination is No, the processing is shifted to Step S46.

At Step S46, the control unit 314 determines whether or not the instruction to order a part required for replacement has been received, in other words, the user has selected the key 408. In cases the determination is No at Step S46, the control unit 314 ends the processing, while the determination is Yes, the processing is shifted to Step S47. At Step S47, the control unit 314 selects a specified dealer as the dealer to whom order information (order data) is transferred. The user touches one of the keys 404 indicating the dealers' names, so that one of the dealers corresponding to the touched key 404 is specified.

Next, at Step S48, the control unit 314 transfers to the service center 100 the order data including the ordered part and the selected dealer's name parts by parts through the cellular-phone transceiver circuit 301 and the cellular-phone antenna 302.

Fig. 9 shows the steps executed in the service center 100 that receives the order data transferred from the control unit 314 at Step S48. At Step S51 in Fig. 9, the management computer 101 determines whether the order data transferred from the control unit 314 at Step S48 have been received or not. The order data can be received, if transferred, through the modem 103 and the terminal 102 into the management computer 101. Next, at Step S52, the management computer 101 transfers, to the specified dealer and others, information including the vehicle information identifying a certain vehicle, replaced parts information identifying the part to be replaced, and the address to be contacted to the vehicle.

As shown in Fig. 10, the dealer receives the information transferred from the management computer at Step S52 shown in Fig. 9, thus being able to contact with the user of the vehicle by using, for example, the cellular-phone unit (the cellular-phone transceiver circuit and the cellular-phone antenna) or other telephones, according to the received information, so that the working date and time and some other agreements for replacing the current part by new one can be decided (Step S61).

In the present embodiment, whenever the engine is started, the check items of information related to the part replacement is collected so as to be transferred to the management computer 101, in addition to the position information. The present invention, however, is not limited to such an operation. During the operation of the engine, these check items of information and the position information may be transferred to the management computer whenever a certain period of time (for example, two hours) elapses.

In the foregoing embodiment, when determined that the user selects the key 408 at Step S46, the control unit 314 transfers the order data including the ordered part and the selected dealer's name through the cellular-phone transceiver circuit 301 and the cellular-phone antenna 302 to the service center 100 (Step S48). The present invention, however, is not limited to this processing. At the time when the user indicates an intention to order parts, for example, at the time when the management computer 101 recognizes the select of the key 408 indicating "ORDER," the management computer may control the communications between a person on the vehicle and an operator in the service center 100, so that the person is able to converse with the operator through the cellular-phone unit (i.e., through the cellular-phone transceiver circuit 301 and the cellular-phone antenna 302). Fig. 3 shows flows and contents of items of information communicated between the person on the vehicle and the operator in the service center. When the user makes cellular-phone conversations to the operator, it is possible to cope with cases required for complicated work processes, for example, such a case of using different dealers according to the type of parts. After the order via the cellular-phone conversations, the operator confirms to the user the content of the parts order and the working date and time for replacing the parts. Therefore, even if complicated work processes are required, the parts can be ordered to the dealer and the work for the replacement can be reserved to the dealer in a steady manner. If necessary, it is further possible to guide the user to a dealer or a network by operator's voice massages.

In the above embodiment, on the basis of the position information of the vehicle 300, the management computer 101 selects at least one dealer whose shop is located within a predetermined radius to the vehicle position and registered in the dealer database server 104 (Step S14). However, the user does not always want to replace parts soon, and in some cases, the user may want to replace parts required for replacement after the user returns home. The management computer, therefore, may select at least one dealer whose shop is close to the user's home, regardless of the vehicle position, so that it is possible to select at least one dealer on the basis of the database including personal information of the registered dealers in the dealer database server 104.

The parts management system stated above is able to use a specified program to execute the above processing.

In addition, the system according to the present invention is not restricted to application to the vehicle employed as the mobile unit, but the system may be applied to other mobile units, such as a small craft.

While there has been described what is at present considered to be the preferred embodiments and modifications of the present invention, it will be understood that various modifications which are not described yet may be made therein, and it is intended to cover in the appended claims all such modifications as fall within the true spirit and scope of the invention.

## Claims

1. A parts management system for a mobile unit, comprising:
a detection device provided at the mobile unit and adapted to detect information related to management of parts of the mobile unit;
a service center management device provided at a service center and permitted to communicate to the detection device, said service center management device being adapted to produce information for a user of the mobile unit according to the information related to the management of the parts of the mobile unit and detected by the detection device; and
an information device permitted to communicate to the service center management device and adapted to send to the user of the mobile unit the information for the user of the mobile unit and produced by the service center management device.

2. A parts management system for a mobile unit, comprising:
a detection device provided at the mobile unit and adapted to detect information related to management of parts of the mobile unit;
a service center management device provided at a service center and permitted to communicate to the detection device, said service center management device being adapted to produce information for a parts supplier according to the information related to the management of the parts of the mobile unit and detected by the detection device;
parts supplier management device provided as a unit of the parts supplier and permitted to communicate to the service center management device; and
an information device permitted to communicate to the service center management device,
wherein said parts supplier management device is adapted to produce information related to part supply according to the information for the parts supplier, said service center management device is adapted to produce information for the user of the mobile unit according to the information related to the part supply and said information device is adapted to send to the user of the mobile unit the information for the user of the mobile unit.

3. The system according to claim 1 or 2, wherein said information device is provided at the mobile unit.

4. The system according to claim 1 or 2, further comprising a phone conversation device provided at the mobile unit for making phone conversations from the user to the service center in accordance with the information sent from the information device.

5. The system according to claim 1 or 2, further comprising a transmitting device provided at the mobile unit for transmitting a demand to the service center management device, said demand being determined by the user of the mobile unit with reference to the information sent from the information device.

6. The system according to claim 5, wherein said service center management device is adapted to receive the demand transmitted from the transmitting device and produce order information of at least one of the parts for the parts supplier according to the demand, thus transferring the order information to the parts supplier.

7. The system according to claim 1 or 2, wherein said information for the user of the mobile unit is information related to at least one of the parts required for replacement in the mobile unit.

8. The system according to claim 1 or 2, wherein said information related to the management of the parts of the mobile unit and detected by the detection device is information indicating a replacement date and time of at least one of the parts of the mobile unit.

9. The system according to claim 1 or 2, wherein said information related to the management of the parts in the mobile unit and detected by the detection device is information indicating a mileage of the mobile unit.

10. The system according to claim 1 or 2, wherein said detection device includes a device for detecting a position at which the mobile unit exists, and said service center management device produces the information for the user of the mobile unit according to the detected position of the mobile unit.

11. The system according to claim 5, wherein said parts supplier is plural, said mobile unit comprises an input device for inputting the demand into the transmitting device, said demand specifying one of the parts suppliers, and said transmitting device is adapted to transmit the demand inputted from the input device to the service center management device.

12. A method of managing parts of a mobile unit, comprising the steps of:
detecting, in the mobile unit, information related to management of parts of the mobile unit;
producing, in a service center, information for a user of the mobile unit according to the detected information related to the management of the parts of the mobile unit; and
information to the user of the mobile unit the produced information for the user of the mobile unit.

13. The method of according to claim 12, wherein said information for the user of the mobile unit is information related to at least one of the parts required for replacement in the mobile unit.

14. A method of managing parts of a mobile unit comprising the steps of:
detecting, at the mobile unit, information related to management of parts of the mobile unit;
producing, at a service center, information for a parts supplier according to the detected information related to the management of the parts of the mobile unit;
producing, at the parts supplier side, information related to part supply according to the information for the parts supplier;
producing, at the service center, information for the user of the mobile unit according to the information related to the part supply; and
information to the user of the mobile unit the information for the user of the mobile unit.

15. The method according to claim 14, wherein said information for the user of the mobile unit is information related to at least one of the parts required for replacement in the mobile unit.

16. A storage medium storing thereon a program code for causing a computer to execute the steps according to claim 12 or 14.

17. A detection unit, when executing the steps according to claim 12 or 14, used for detecting the information related to the management of the parts in the mobile unit.

18. A management unit, when executing the steps according to claim 12 or 14, used for producing the information for the user of the mobile unit.

19. A management unit, when executing the steps according to claim 14, used for producing the information for the parts supplier.

20. A management unit, when executing the steps according to claim 14, used for producing the information related to the part supply.

21. A information unit, when executing the steps according to claim 12 or 14, used for sending the information for the user of the mobile unit to the user thereof.
